# EUROPÄISCHE PATENTSCHRIFT

(11) **EP 1 801 463 B1**
(45) Veröffentlichungstag und Bekanntmachung des Hinweises auf die Patenterteilung: **23.10.2013**
(21) Anmeldenummer: 06024481.1
(22) Anmeldetag: 25.11.2006
(51) Int. Cl.: F16H 59/02, F16H 59/10

(54) **Schaltvorrichtung für ein Getriebe**
Changing device for a transmission
Dispositif pour changer la vitesse pour une boîte de vitesses

(30) Priorität: 24.12.2005 DE 102005062298
(43) Veröffentlichungstag der Anmeldung: 27.06.2007
(73) Patentinhaber: Dr. Ing. h.c. F. Porsche AG, 70435 Stuttgart (DE)
(72) Erfinder: Sickart, Michael, 71296 Heimsheim (DE)

(56) Entgegenhaltungen:
- EP-A- 0 416 227
- DE-A1- 10 112 698
- DE-A1- 10 206 985
- DE-A1- 19 714 495
- DE-A1- 19 737 296
- DE-U1-202004 004 151

## Beschreibung

Die vorliegende Erfindung betrifft eine Schaltvorrichtung für ein automatisiertes oder automatisches Getriebe, insbesondere eines Kraftfahrzeugs, mit den Merkmalen des Oberbegriffs des Anspruchs 1.

Ein derartiges Getriebe ist beispielsweise aus der EP 0 416 227 A1 bekannt und weist einen Schalthebel zum Auswählen von Automatikschaltstufen und Gängen des Getriebes auf, der aus einer stabilen Ausgangsstellung in mehrere unmittelbar benachbarte labile Schaltstellungen zum Auswählen der Automatikschaltstufen und der Gänge überführbar ist, aus denen er selbsttätig in die Ausgangsstellung zurückkehrt. Des weiteren ist eine Anzeige vorgesehen, die zum Visualisieren des aktuell eingelegten Gangs und/oder der aktuell aktivierten Automatikschaltstufe dient. Die bekannte Schaltvorrichtung umfasst zwei Schaltgassen, die sich in der stabilen Ausgangsstellung kreuzen und die jeweils beiderseits der stabilen Ausgangsstellung je eine der labilen Schaltstellungen aufweisen. Eine Getriebesteuerung ordnet der Ausgangsstellung und den Schaltstellungen die einzelnen Automatikschaltstufen zu, die durch Auslenken oder Tippen des Schalthebels in die labilen Schaltstellungen auswählbar sind. Unter den Automatikschaltstufen befindet sich auch eine Manualschaltstufe, in der durch Vor- und Zurücktippen des Schalthebels zwischen den einzelnen Gängen des Getriebes umschaltbar ist. Des weiteren umfassen die Automatikschaltstufen eine Parkstellung, in der eine Parksperre des Getriebes aktiviert ist.

Aus der DE 197 37 296 C2 ist eine weitere Schaltvorrichtung bekannt, bei welcher der Schalthebel in einer Schaltgasse verstellbar ist, die vier nebeneinander angeordnete stabile Schaltstellungen aufweist, die jeweils einer Automatikschaltstufe des Getriebes zugeordnet sind. An eine der aussenliegenden stabilen Schaltstellungen, die als Manualschaltstufe ausgestaltet ist, grenzen drei labile Schaltstellungen an, von denen die eine als Vorwärts-Schaltstufe ausgestaltet und in der Schaltgasse angeordnet ist. Die beiden anderen labilen Schaltstellungen sind beiderseits der stabilen Manualschaltstellung in einer Quergasse angeordnet, welche die Schaltgasse in der Manualschaltstellung kreuzt. Die beiden labilen Schaltstellungen der Quergasse dienen zum Hoch- und Herunterschalten der Gänge. Die anderen stabilen Schaltstellungen der Schaltgasse sind eine Leerlauf-Schaltstufe, eine Rückwärts-Schaltstufe und eine Park-Schaltstufe.

Die DE 20 2004 004 151 U1 zeigt eine Schaltvorrichtung, bei der ein Schalthebel in einer Automatik-Schaltgasse zum Umschalten zwischen Automatikschaltstufen verstellbar ist und über eine Quergasse in eine Tipp-Schaltgasse überführbar ist, in der er zum Umschalten zwischen Getriebegängen verstellbar ist. In der Tipp-Schaltgasse weist der Schalthebel eine stabile Schaltstellung auf, in welche der Schalthebel aus allen labilen Schaltstellungen der drei Gassen selbsttätig zurückkehrt.

Aus der DE 197 14 495 A1 ist ebenfalls eine Schaltvorrichtung bekannt, bei der ein Schalthebel über eine Quergasse von einer Automatik-Schaltgasse in eine Tipp-Schaltgasse überführbar ist. Die beiden Kreuzungspunkte zwischen den drei Gassen bilden dabei jeweils stabile Schaltstellungen, während die übrigen Schaltstellungen instabil sind. Aus den instabilen Schaltstellungen kehrt der Schalthebel in die jeweils benachbarte stabile Schaltstellung selbsttätig zurück.

Aus der DE 102 06 985 A1 ist eine weitere Schaltvorrichtung bekannt, bei der ein Schalthebel in zwei über eine Quergasse miteinander verbundene Schaltgassen zum Auswählen von Getriebegängen bzw. von Automatikschaltstufen verstellbar ist. Die bekannte Schaltvorrichtung ist monostabil und weist für den Schalthebel nur eine einzige stabile Schaltstellung auf. Zum Auswählen eines Getriebegangs bzw. einer Automatikschaltstufe wird der Schalthebel manuell aus seiner stabilen Schaltstellung in der einen oder in der anderen Schaltgasse in die jeweils gewünschte Schaltstellung ausgelenkt. Anschließend kehrt der Schalthebel nach dem Loslassen aus jeder möglichen Auslenkstellung selbsttätig in die stabile Schaltstellung zurück.

Aus der DE 101 12 698 A1 ist eine Schaltvorrichtung für ein Kraftfahrzeuggetriebe bekannt, die einen Lenkstockschalthebel umfasst. Der Lenkstockschalthebel ist mit einem Handstück versehen, das gegenüber einem Trägerrohr in zwei Endstellungen längsverschieblich ist. Dabei ist der Lenkstockschalthebel um zwei Schwenkachsen schwenkbar angeordnet, wobei der Lenkstockschalthebel nach jeder Schwenkbewegung in seine Ausgangsstellung zurückkehrt.

Dieses Dokument offenbart die Merkmale des Oberbegriffs des Anspruchs 1.

Die vorliegende Erfindung beschäftigt sich mit dem Problem, für eine Schaltvorrichtung der eingangs genannten Art eine verbesserte Ausführungsform anzugeben, die sich insbesondere durch eine einfache Handhabung und vorzugsweise durch eine hohe Betriebssicherheit auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, den Schalthebel zwischen zwei stabilen Schaltstellungen, nämlich der Ausgangsstellung und einer Ruhestellung, verstellbar auszugestalten, wobei der Schalthebel ausschließlich in der Ausgangsstellung in mehrere unmittelbar benachbarte labile Schaltstellungen überführbar ist Auf diese Weise lässt sich der stabilen Ruhestellung einfach eine vom normalen Fahrbetrieb abgekoppelte Getriebefunktion zuordnen. Die Schaltvorrichtung lässt sich dadurch besonders einfach bedienen und besitzt eine erhöhte Betriebssicherheit.

Erfindungsgemäß wird der Ruhestellung eine Parkschaltstufe des Getriebes zugeordnet, bei welcher eine Parksperre des Getriebes aktiviert ist. Durch die ausschließlich der Parkfunktion zugeordnete Ruhestellung und die allen Fahrfunktionen des Getriebes zugeordnete Ausgangsstellung lässt sich optisch und haptisch und somit für den Fahrzeugführer intuitiv eine klare Trennung zwischen der Parkfunktion und den Fahrfunktionen erreichen, was die Betriebssicherheit des Getriebes erhöht und gleichzeitig seine Bedienung vereinfacht.

Die erfindungsgemäße Schalteinrichtung zeichnet sich dadurch aus, dass der Schalthebel aus der Ausgangsstellung in die Ruhestellung mittels einer Auslenkbewegung innerhalb einer reellen, in ins Fahrzeug montiertem Zustand der Schaltvorrichtung parallel zur Fahrzeuglängsrichtung vorgesehenen Schaltgasse überführbar ist, aus der er ausschließlich in Richtung der Ausgangsstellung herausführbar ist, und die Parksperre des Getriebes durch die Auslenkbewegung des Schalthebels aktiviert wird.

Bei einer bevorzugten Ausführungsform kann eine Sicherungstaste vorgesehen sein, die im unbetätigten Zustand den in die Ruhestellung verstellten Schalthebel in der Ruhestellung sichert und nur im betätigten Zustand ein Herausführen des Schalthebels aus der Ruhestellung zulässt. Durch diese Maßnahme kann ein versehentliches Überführen des Schalthebels aus der Ruhestellung in die Ausgangsstellung vermieden werden, was die Betriebssicherheit der Schaltvorrichtung erhöht.

Bei einer Weiterbildung kann besagte Sicherungstaste so ausgestaltet sein, dass sie im betätigten Zustand den in die Ausgangsstellung verstellten Schalthebel in der Ausgangsstellung sichert und nur im unbetätigten Zustand ein Verstellen des Schalthebels in die benachbarten labilen Schaltstellungen zulässt. Auch diese Maßnahme erhöht die Betriebssicherheit und den Betätigungskomfort des Getriebes, da beim Überführen des Schalthebels von der Ruhestellung in die Ausgangsstellung ein versehentliches Auslenken des Schalthebels in eine der labilen Schaltstellungen nicht möglich ist.

Eine weitere Komfortsteigerung und Erhöhung der Betriebssicherheit lässt sich dadurch erzielen, dass die Sicherungstaste nur im betätigten Zustand ein Überführen des Schalthebels von der Ausgangsstellung in die Ruhestellung zulässt. Hierdurch lässt sich ein versehentliches Überführen des Schalthebels in die Ruhestellung während des Fahrbetriebs vermeiden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Schaltvorrichtung,
- Fig. 2 bis 5: jeweils einem Schalthebel in a) einer Seitenansicht und b) einer Draufsicht mit c) der zugehörigen Anzeige bei unterschiedlichen Schaltstellungen,
- Fig. 6 bis 9: jeweils den Schalthebel a) in einer Draufsicht mit Betätigungsrichtung und b) mit zugehöriger Anzeige.

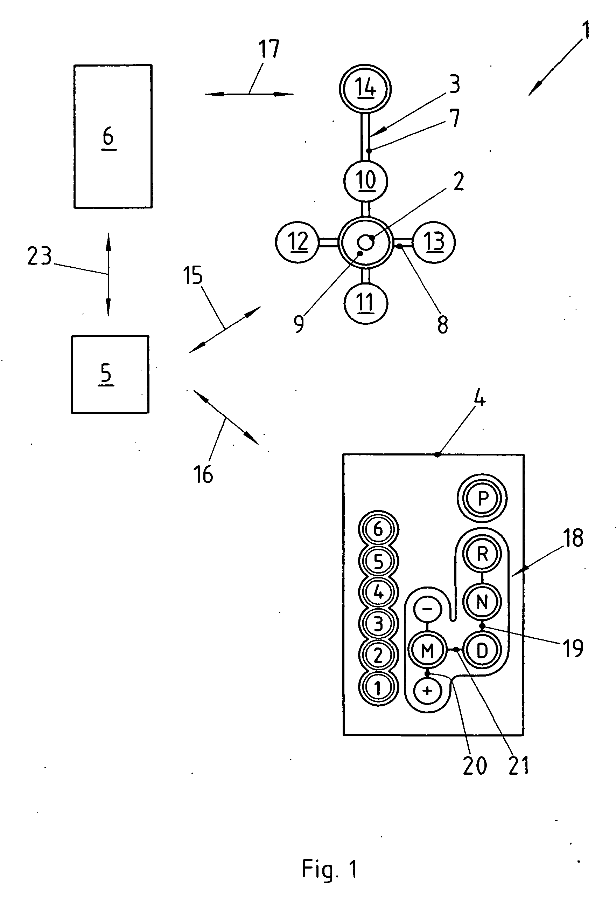

Entsprechend Fig. 1 umfasst eine erfindungsgemäße Schaltvorrichtung 1 einen Schalthebel 2, der in einer Schaltgassenanordnung 3 verstellbar ist, sowie eine Anzeige 4 und eine Getriebesteuerung 5. Die Schaltvorrichtung 1 dient zum Betätigen eines automatisierten oder automatischen Getriebes 6, vorzugsweise eines Kraftfahrzeugs.

Die Schaltgassenanordnung 3, die auch als reelle Schaltgassenkonfiguration bezeichnet werden kann, umfasst eine erste Schaltgasse 7 und eine die erste Schaltgasse 7 kreuzende zweite Schaltgasse 8. Die erste Schaltgasse 7 ist im Einbauzustand vorzugsweise parallel zur Fahrzeuglängsrichtung orientiert und wird daher im folgenden auch als Längsgasse 7 bezeichnet. Im Unterschied dazu ist die zweite Schaltgasse 8 vorzugsweise quer zur Fahrzeuglängsrichtung orientiert und wird daher im folgenden auch als Quergasse 8 bezeichnet. Längsgasse 7 und Quergasse 8 stehen vorzugsweise senkrecht aufeinander. Die reelle Schaltgassenkonfiguration 3 ist so ausgestaltet, dass sie für den Schalthebel 2 eine stabile Ausgangsstellung 9 sowie mehrere labile Schaltstellungen 10 bis 13 bereitstellt. Die labilen Schaltstellungen 10 bis 13 sind unmittelbar benachbart zur stabilen Ausgangsstellung 9 angeordnet und charakterisieren sich dadurch, dass der aus der stabilen Ausgangsstellung 9 in eine der labilen Schaltstellungen 10 bis 13 ausgelenkte Schalthebel 2 automatisch in die Ausgangsstellung 9 zurückkehrt. Hierzu ist die Schaltvorrichtung 1 mit entsprechenden Rückstellmitteln versehen. Die Ausgangsstellung 9 ist bezüglich der Schaltstellungen 10 bis 13 zentral angeordnet. In der gezeigten, bevorzugten Einbausituation muss der Schalthebel 2 aus der Ausgangsstellung 9 zum Überführen in die Schaltstellung 10 nach vorn, in die Schaltstellung 11 nach hinten, in die Schaltstellung 12 nach links und in die Schaltstellung 13 nach rechts ausgelenkt werden. Somit liegen die Links-Schaltstellung 12 und die Rechts-Schaltstellung 13 auf der Quergasse 8 beiderseits der Ausgangsstellung 9 während die Vorne-Schaltstellung 10 und die Hinten-Schaltstellung 11 in der Längsgasse 7 beiderseits der Ausgangsstellung 9 angeordnet sind.

Des weiteren umfasst die Schaltgassenanordnung 3 eine als Ruhestellung 14 bezeichnete weitere stabile Schaltstellung, in welche der Schalthebel 2 aus der Ausgangsstellung 9 überführbar ist. Die stabile Ruhestellung 14 ist ebenfalls in der Längsgasse 7 angeordnet und zwar endseitig. Da keine weitere Quergasse vorhanden ist, ist der Schalthebel 2 aus der Ruhestellung 14 nur in einer Richtung, nämlich in Richtung zur Ausgangsstellung 9 herausführbar. In Fig. 1 sind stabile Schaltstellungen durch Doppelkreise symbolisiert, während labile Schaltstellungen durch Einfachkreise dargestellt sind.

Die Getriebesteuerung 5 ordnet der stabilen Ausgangsstellung 9 und den labilen Schaltstellungen 10 bis 13 Automatikschaltstufen und/oder Gänge des Getriebes 6 zu. Hierzu ist eine durch einen Doppelpfeil angedeutete elektronische Wirkverbindung 15 zwischen der Getriebesteuerung 5 und der Schaltgassenanordnung 3 vorgesehen. Des weiteren ist die Getriebesteuerung 5 durch eine elektronische Wirkverbindung 16 mit der Anzeige 4 verbunden. Die Anzeige 4 dient zum Visualisieren des aktuell eingelegten Gangs und/oder der aktuell aktivierten Automatikschaltstufe. Des weiteren dient die Anzeige 4 hier zur Visualisierung aller möglichen Gänge und Automatikschaltstufen. Beispielsweise umfasst das Getriebe 6 als Automatikschaltstufen eine Vorwärts-Schaltstufe D, eine Leerlauf-Schaltstufe N und eine Rückwärts-Schaltstufe R. Des weiteren ist hier eine Manual-Schaltstufe M vorgesehen, in der durch Auslenken des Schalthebels 2 in dazu benachbarte Schaltstellungen zum Herunterschalten, so genannte Runterschaltstellung, gekennzeichnet durch ein Minus-Zeichen (-), und zum Hochschalten, so genannte Hochschaltstellung, gekennzeichnet durch ein Plus-Zeichen (+), die einzelnen Gänge (1) bis (6) des Getriebes 6 anwählbar sind.

Die vorgenannten Schaltstellungen, Getriebegänge und Automatikschaltstufen sind über die Getriebesteuerung 5 elektronisch der Ausgangsstellung 9 und den dazu benachbarten vier labilen Schaltstellungen 10 bis 13 zugeordnet. Die Getriebesteuerung 5 ist dabei auf übliche Weise, z.B. über eine durch einen Doppelpfeil angedeutete elektronische Wirkverbindung 23 mit dem Getriebe 6 gekoppelt.

Des weiteren umfasst das Getriebe 6 eine Parkschaltstufe P, in der eine Parksperre des Getriebes 6 aktiviert ist. Diese Park-Schaltstufe P ist der stabilen Ruhestellung 14 zugeordnet. Entsprechend einer bevorzugten Ausführungsform der vorliegenden Erfindung ist die Park-Schaltstufe P der Ruhestellung 14 nicht elektronisch über die Getriebesteuerung 5, sondern mechanisch zugeordnet. Eine entsprechende mechanische Wirkverbindung 17 zwischen der Ruhestellung 14 und dem Getriebe 6 ist in Fig. 1 durch einen Doppelpfeil symbolisiert. Diese mechanische Wirkverbindung 17 ist beispielsweise durch einen Seilzug realisiert. Somit kann die Parksperre des Getriebes 6 beim Überführen des Schalthebels 2 in die Ruhestellung 14 mechanisch durch eine Zwangskopplung zwischen Getriebe 6 und Schalthebel 2 aktiviert werden, wobei die Verstellbewegung des Schalthebels 2 den dazu erforderlichen Antrieb liefert.

Die Schaltvorrichtung 1 umfasst vorzugsweise genau zwei stabile Schaltstellungen, nämlich die Ausgangsstellung 9 und die Ruhestellung 14, sowie genau vier labile Schalthebelstellungen 10 bis 13. Über diese insgesamt 6 Schaltstellungen 9 bis 14 sind alle Gänge und Automatikschaltstufen des Getriebes 6 auswählbar.

Um die Bedienung der Schaltvorrichtung 1 für den Anwender zu vereinfachen, simuliert die Getriebesteuerung 5 eine virtuelle Schaltgassenkonfiguration 18, die dem Anwender über die Anzeige 4 visualisiert wird. Die virtuelle Schaltgassenkonfiguration 18 umfasst zwei parallele Schaltgassen, nämlich eine Automatik-Schaltgasse 19 zum Auswählen der Automatikschaltstufen und eine Tipp-Schaltgasse 20 zum Auswählen der Gänge. Des weiteren ist eine Verbindungsgasse 21 vorgesehen, die sich quer zu den beiden Schaltgassen 19, 20 erstreckt und diese miteinander verbindet. In der Automatikschaltgasse 19 werden mehrere virtuelle stabile Schaltgassenpositionen simuliert, denen jeweils eine der Automatik-Schaltstufen, hier die Vorwärts-Schaltstufe D, die Rückwärts-Schaltstufe R und dazwischen die Leerlauf-Schaltstufe N, zugeordnet ist. Im Unterschied dazu umfasst die Tipp-Schaltgasse 20 nur eine virtuelle stabile Schaltgassenposition, der die Manual-Schaltstufe M zugeordnet ist. Jedoch umfasst die Tipp-Schaltgasse 20 beiderseits der Manual-Schaltstufe M zusätzlich zwei virtuelle labile Schaltgassenpositionen, denen die Hochschaltstellung (+) und die Runterschaltstellung (-) zugeordnet sind. Die Verbindungsgasse 21 ist hier so angeordnet, dass sie virtuell die Manual-Schaltstufe M mit der Vorwärts-Schaltstufe D verbindet. Des weiteren visualisiert die Anzeige 4 die reelle stabile Ruhestellung 14, der die Park-Schaltstufe P zugeordnet ist. Außerdem visualisiert die Anzeige 4 vorzugsweise die schaltbaren Vorwärtsgänge des Getriebes 6. In den anderen Fig. sind die jeweils aktive Automatikschaltstufe und der jeweils eingelegte Getriebegang durch einen den jeweiligen Doppelkreis ausfüllenden Ring symbolisiert.

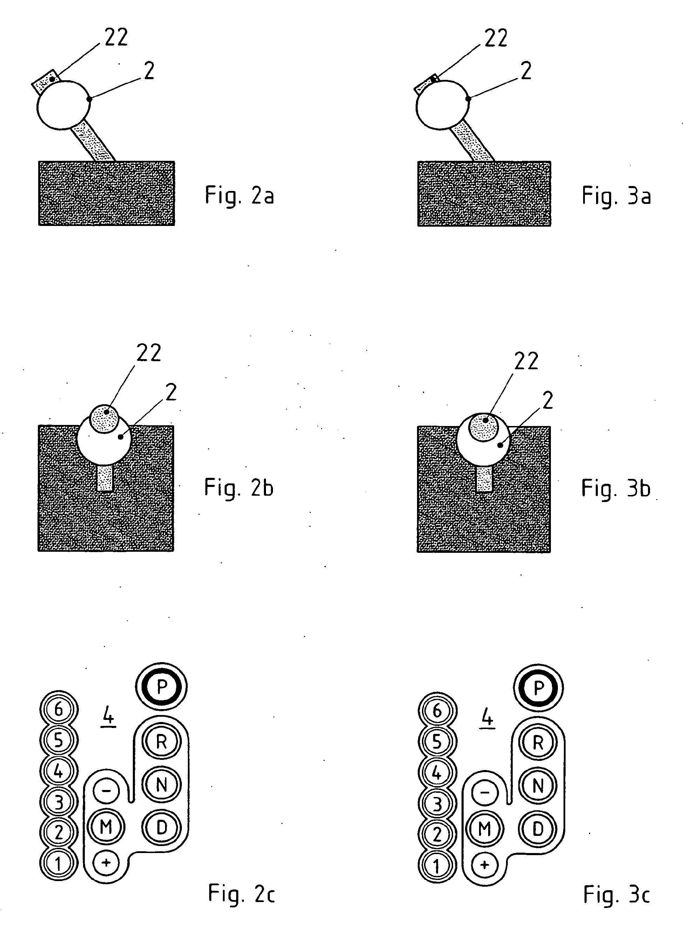

Mit Bezug auf die Fig. 2 bis 5 wird im folgenden das Überführen des Schalthebels 2 von der Ruhestellung 14 zur Ausgangsstellung 9 und umgekehrt näher erläutert.

In den Fig. 2a bis 2c befindet sich der Schalthebel 2 in der Ruheposition 14. Dieser ist die Park-Schaltstufe P zugeordnet, was an der Anzeige 4 durch eine entsprechende Hervorhebung signalisiert ist. Bei der hier gezeigten bevorzugten Ausführungsform ist die Schaltvorrichtung 1 zusätzlich mit einer Sicherungstaste 22 ausgestattet, die bei der hier gezeigten Ausführungsform in den Schalthebel 2 integriert ist bzw. an diesem ausgebildet oder angeordnet ist. Im Zustand der Fig. 2a bis 2c ist die Sicherungstaste 22 unbetätigt. Die Sicherungstaste 22 ist so ausgestaltet, dass in ihrem unbetätigten Zustand der in die Ruhestellung 14 verstellte Schalthebel 2 in der Ruhestellung 14 gesichert ist und somit unverstellbar ist. Die Park-Schaltstufe P ist somit effektiv gesichert.

In den Fig. 3a bis 3c ist die Sicherungstaste 22 betätigt, z.B. durch Niederdrücken. In ihrem betätigten Zustand gibt die Sicherungstaste 22 den Schalthebel 2 frei, so dass dieser aus der Ruhestellung 14 herausgeführt werden kann. Durch Betätigen der Sicherungstaste 22 bei in die Ruhestellung 14 verstelltem Schalthebel 2 bleibt jedoch die Park-Schaltstufe P und somit die Parksperre des Getriebes 6 aktiv.

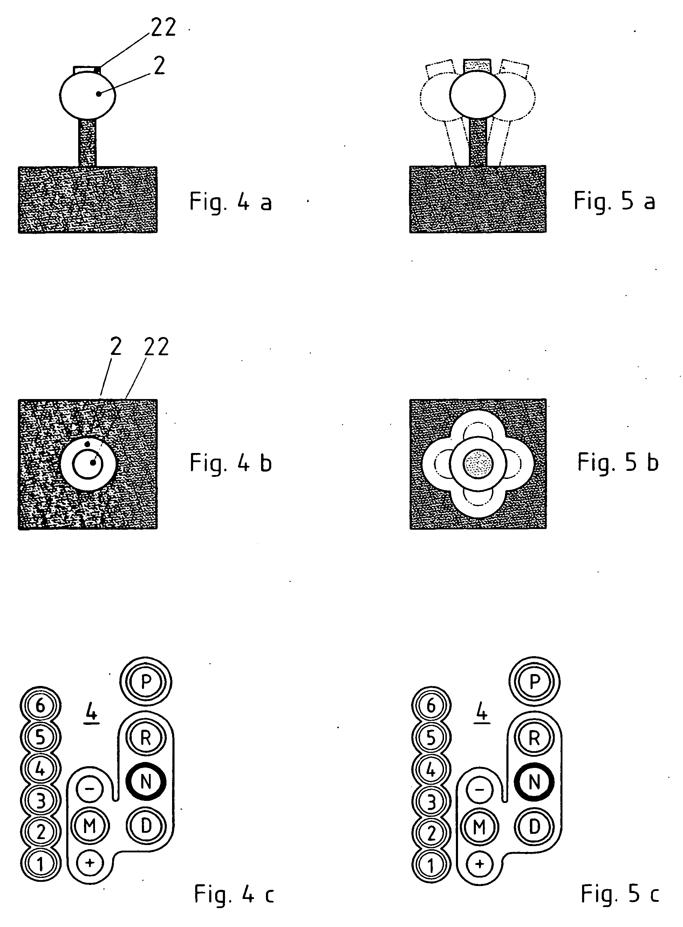

Die Fig. 4a bis 4c zeigen den in die Ausgangsstellung 9 verstellten Schalthebel 2 bei betätigter Sicherungstaste 22. Die Sicherungstaste 22 ist dabei so ausgestaltet, dass sie im betätigen Zustand den in die Ausgangsstellung 9 verstellten Schalthebel 2 in der Ausgangsstellung 9 sichert, und zwar so, dass er nicht in die benachbarten labilen Schaltstellungen 10 bis 13 überführbar ist. Bei betätigter Sicherungstaste 22 lässt sich der Schalthebel 2 ausschließlich zwischen der Ruhestellung 14 und der Ausgangsstellung 9 verstellen. Wie Fig. 4c entnehmbar ist, aktiviert die Getriebesteuerung 5 beim Überführen des Schalthebels 2 von der Ruhestellung 14 in die Ausgangsstellung 9 automatisch die Leerlauf-Schaltstufe N.

Erst wenn die Sicherungstaste 22 nach dem Überführen des Schalthebels 2 in die Ausgangsstellung 9 entsprechend den Fig. 5a bis 5c unbetätigt ist, lässt sich der Schalthebel 2 von seiner Ausgangsstellung 9 in die labilen Schaltstellungen 10 bis 13 auslenken, jedoch nicht mehr in die stabile Ruhestellung 14.

Für die Überführung des Schalthebels 2 aus der Ruhestellung 14 in die Ausgangsstellung 9 kann eine weitere Sicherung in Form einer hier nicht näher gezeigten Riegelvorrichtung vorgesehen sein. Diese verriegelt den Schalthebel 2 in der Ruhestellung 14, solange ein Zündschlüssel eines mit dem Getriebe 6 ausgestatteten Fahrzeugs in ein Zündschloss eingesteckt ist und/oder solange sich der Zündschlüssel im Zündschloss in einer Abzugsposition befindet und/oder solange eine Betriebsbremse des Fahrzeugs unbetätigt ist. Mit anderen Worten, der Schalthebel 2 kann z.B. nur dann aus der Ruhestellung 14 in die Ausgangsstellung 9 überführt werden, wenn ein Zündschlüssel im Zündschloss angeordnet ist, dabei aus der Abzugsposition herausgedreht ist und wenn der Fahrzeugführer die Betriebsbremse betätigt.

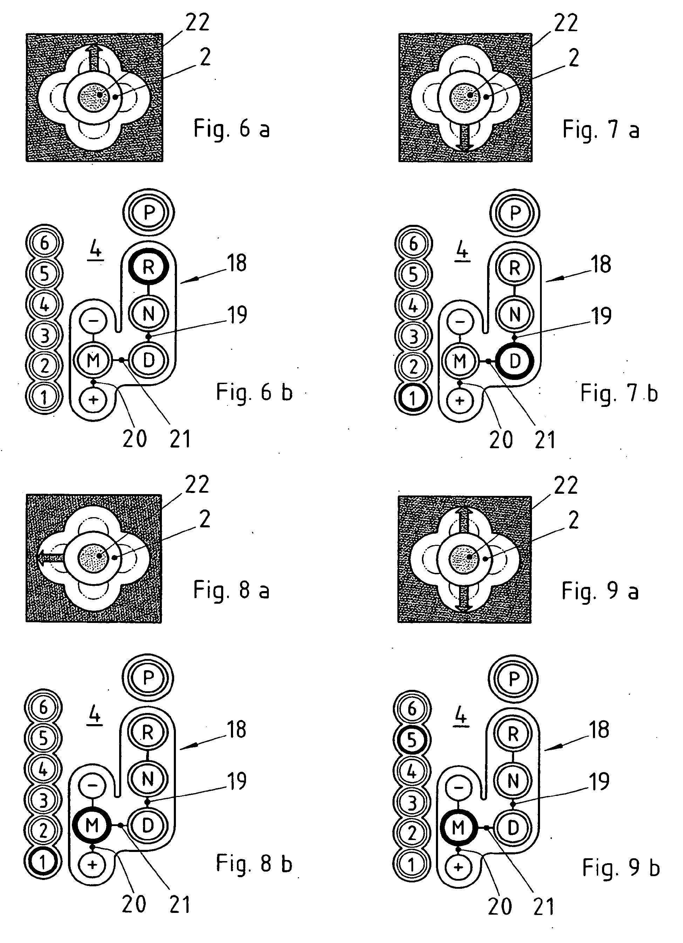

Ist der Schalthebel 2 erfolgreich von der Ruhestellung 14 in die Ausgangsstellung 9 überführt, ist die Leerlauf-Schaltstufe N aktiviert. Der Schalthebel 2 kann nun nach vorn, hinten, links und rechts in die entsprechenden labilen Schaltstellungen 10 bis 13 ausgelenkt werden. Die Getriebesteuerung 5 ordnet die Auslenkung des Schalthebels 2 in Abhängigkeit der Bewegungsrichtung dieser Schalthebelauslenkung einer Bewegung des Schalthebels 2 in der virtuellen Schaltgassenkonfiguration 18 in der entsprechenden Richtung zu. Im folgenden wird anhand der Fig. 6 bis 9 mit mehreren Beispielen die Funktionsweise der Schaltvorrichtung 1 näher erläutert.

Im Ausgangszustand befindet sich der Schalthebel 2 in der reellen Ausgangsstellung 9 und innerhalb der virtuellen Schaltgassenkonfiguration 18 in der Leerlauf-Schaltstufe N. Entsprechend der virtuellen Automatik-Schaltgasse 19 führt nur ein Auslenken des Schalthebels 2 in die Vorne-Schaltstellung 10 und in die Hinten-Schaltstellung 11 zu einem Schaltvorgang, während Auslenkungen nach links und rechts ignoriert werden. Um kritische Situationen für das Getriebe 6 zu vermeiden, kann eine zusätzliche Sicherung vorgesehen sein, dergestalt, dass die Getriebesteuerung 5 auch ein Auslenken nach vorn und ein Auslenken nach hinten ignoriert, solange die Leerlauf-Schaltstufe N aktiviert ist und die Betriebsbremse des Fahrzeugs unbetätigt ist. Das bedeutet, dass bei aktiver Leerlauf-Schaltstufe N ein Umschalten in eine andere Automatikschaltstufe durch Auslenken des Schalthebels 2 in eine der labilen Schaltstellungen 10 bis 13 nur dann möglich ist, wenn die Betriebsbremse des Fahrzeugs betätigt ist.

Entsprechend Fig. 6a wird der Schalthebel 2 nach vorn in die labile Vorne-Schaltstellung 10 ausgelenkt. In der Folge bewirkt die Getriebesteuerung 5 eine Aktivierung der Rückwärts-Schaltstufe R. In der virtuellen Automatik-Schaltgasse 19 wird dadurch der Schalthebel 2 entsprechend verstellt, was gemäß Fig. 6b der Anzeige 4 entnehmbar ist.

Wird jedoch der Schalthebel 2 entsprechend Fig. 7a in die Hinten-Schaltstellung 11 ausgelenkt, bewirkt die Getriebesteuerung 5 ausgehend von der Leerlauf-Schaltstufe N ein Umschalten in die Vorwärts-Schaltstufe D. Der aktive Schaltzustand bzw. die aktuelle Position des Schalthebels 2 innerhalb der virtuellen Schaltgassenkonfiguration 18 ist gemäß Fig. 7b wieder der Anzeige 4 zu entnehmen. Durch die Aktivierung der Vorwärts-Schaltstufe D ausgehend von der Leerlauf-Schaltstufe N wird automatisch der erste Getriebegang eingelegt, was ebenfalls in der Anzeige 4 erkennbar ist.

Befindet sich der Schalthebel 2 in der virtuellen Automatik-Schaltgasse 19 in der Vorwärts-Schaltstufe D lässt er sich entsprechend Fig. 8a durch eine Auslenkung in die Links-Schaltstellung 12 über die virtuelle Verbindungsgasse 11 in die virtuelle Tipp-Gasse 20 überführen, und zwar dort in die Manual-Schaltstufe M, was entsprechend Fig. 8b wieder der Anzeige 4 entnehmbar ist. Mit dem Aktivieren der Manual-Schaltstufe M wird dabei der aktuell eingelegte Getriebegang nicht verändert. Im Beispiel bleibt somit der erste Gang eingelegt.

Entsprechen Fig. 9a kann nun durch Vortippen und Zurücktippen in die labile Vorne-Schaltstellung 10 bzw. die labile Hinten-Schaltstellung 11 der Schalthebel 2 innerhalb der virtuellen Tipp-Gasse 20 ausgelenkt werden. Damit geht ein schrittweises Hochschalten und Runterschalten der Getriebegänge einher. In dem in Fig. 9b gezeigten Beispiel ist der 5. Gang eingelegt.

Bemerkenswert ist, dass der Schalthebel 2 trotz unterschiedlicher virtueller stabiler Schaltstellungen innerhalb der virtuellen Schaltgassen 19, 20 reell stets nur die stabile Ausgangsstellung 9 einnimmt.

## Patentansprüche

1. Schaltvorrichtung für ein automatisiertes oder automatisches Getriebe (6), insbesondere eines Kraftfahrzeugs, mit
einem Schalthebel (2) zum Auswählen von Automatikschaltstufen und Gängen des Getriebes (6), der aus einer stabilen Ausgangsstellung (9) in mehrere unmittelbar benachbarte labile Schaltstellungen (10, 11, 12, 13) zum Auswählen der Automatikschaltstufen und der Gänge überführbar ist, aus denen er selbsttätig in die Ausgangsstellung (9) zurückkehrt, und
einer Anzeige (4) zum Visualisieren des aktuell eingelegten Gangs und/oder der aktuell aktivierten Automatikschaltstufe, wobei
ausschließlich eine weitere stabile Schaltstellung des Schalthebels (2) vorgesehen ist, nämlich die Ruhestellung (14), und wobei
bei in die Ruhestellung (14) verstelltem Schalthebel (2) eine Parksperre des Getriebes (6) aktiviert ist, und
die Parksperre beim Überführen des Schalthebels (2) in die Ruhestellung (14) mechanisch aktiviert wird,
**dadurch gekennzeichnet, dass**
der Schalthebel (2) aus der Ausgangsstellung (9) in die Ruhestellung (14) mittels einer Auslenkbewegung innerhalb einer reellen, in ins Fahrzeug montiertem Zustand der Schaltvorrichtung parallel zur Fahrzeuglängsrichtung vorgesehenen Schaltgasse (7) überführbar ist, aus der er ausschließlich in Richtung der Ausgangsstellung (9) herausführbar ist, und
die Parksperre des Getriebes (6) durch die Auslenkbewegung des Schalthebels (2) aktiviert wird.

2. Schaltvorrichtung nach Anspruch 1, **dadurch gekennzeichnet, dass** eine Sicherungstaste (22) vorgesehen ist, die im unbetätigten Zustand den in die Ruhestellung (14) verstellten Schalthebel (2) in der Ruhestellung (14) sichert und nur im betätigten Zustand ein Herausführen des Schalthebels (2) aus der Ruhestellung (14) zulässt.

3. Schaltvorrichtung nach Anspruch 2, **dadurch gekennzeichnet, dass** die Sicherungstaste (22) im betätigten Zustand den in die Ausgangsstellung (9) verstellten Schalthebel (2) in der Ausgangsstellung (9) sichert, derart, dass er nur im unbetätigten Zustand in die benachbarten labilen Schaltstellungen (10, 11, 12, 13) verstellbar ist.

4. Schaltvorrichtung nach Anspruch 2 oder 3, **dadurch gekennzeichnet, dass** die Sicherungstaste (22) nur im betätigten Zustand ein Überführen des Schalthebels (2) von der Ausgangsstellung (9) in die Ruhestellung (14) zulässt.

5. Schaltvorrichtung nach einem der Ansprüche 2 bis 4, **dadurch gekennzeichnet, dass** die Sicherungstaste (22) am Schalthebel (2) ausgebildet ist oder in diesen integriert ist.

6. Schaltvorrichtung nach einem der Ansprüche 1 bis 5, **dadurch gekennzeichnet, dass** genau vier labile Schaltstellungen (10, 11, 12, 13) benachbart zur Ausgangsstellung (9) angeordnet sind.

7. Schaltvorrichtung nach einem der Ansprüche 1 bis 6, **dadurch gekennzeichnet,**
- **dass** zwei zur Ausgangsstellung (9) benachbarte labile Schaltstellungen (10, 11) in einer ersten Schaltgasse (7) oder Längsgasse (7) angeordnet sind, und
- **dass** zwei zur Ausgangsstellung (9) benachbarte labile Schaltstellungen (12, 13) in einer zweiten Schaltgasse (8) oder Quergasse (8) angeordnet sind, und
- **dass** die erste Schaltgasse (7) oder Längsgasse (7) senkrecht zur zweiten Schaltgasse (8) oder Quergasse (8) angeordnet ist, und
- **dass** die Ruhestellung (14) an einem Ende der ersten Schaltgasse (7) oder Längsgasse (7) angeordnet ist.

8. Schaltvorrichtung nach einem der Ansprüche 1 bis 7, **dadurch gekennzeichnet,**
- **dass** eine Getriebesteuerung (5) vorgesehen ist, die den labilen Schaltstellungen (10, 11, 12, 13) die Automatikschaltstufen und die Gänge zuordnet und die den jeweils ausgewählten Gang oder die jeweils ausgewählte Automatikschaltstufe elektronisch aktiviert, und
- **dass** die Getriebesteuerung (5) eine in einer Anzeige (4) abgebildete Schaftgassenkonfiguration (18) simuliert, die eine Automatik-Schaltgasse (19) zum Auswählen der Automatikschaltstufen und eine dazu parallele Tipp-Schaltgasse (20) zum Auswählen der Gänge sowie eine quer zu den Schaltgassen (19, 20) verlaufende Verbindungsgasse (21) aufweist, und
- **dass** in der Automatik-Schaltgasse (19) mehrere virtuelle stabile Schattgassenpositionen simuliert werden, denen jeweils eine der Automatikschaltstufen zugeordnet ist.

9. Schaltvorrichtung nach Anspruch 8, **dadurch gekennzeichnet,**
- **dass** die virtuellen stabilen Schaltgassenpositionen der Automatik-Schaltgasse (19) eine Vorwärts-Schaltstufe (D), eine Rückwärts-Schaltstufe (R) und eine, vorzugsweise dazwischen angeordnete, Leerlauf-Schaltstufe (N) umfassen, und
- **dass** die Tipp-Schaltgasse (20) eine virtuelle stabile Schaltgassenposition, der eine Manual-Schaltstufe (M) zugeordnet ist, und zwei dazu direkt benachbarte virtuelle labile Schaltgassenpositionen aufweist, denen eine Hochschaftstellung und eine Herunterschaltstellung zum Umschalten der Gänge zugeordnet sind, und
- **dass** die Verbindungsgasse (21) zwei virtuelle stabile Schaltgassenpositionen aufweist, denen jeweils eine der Automatikschaltstufen zugeordnet ist, und
- **dass** die virtuellen stabilen Schaltgassenpositionen der Verbindungsgasse die Manual-Schaltstufe (M) der Tipp-Schaltgasse (20) und die Vorwärts-Schaltstufe (D) der Automatik-Schaltgasse (19) sind.

10. Schaltvorrichtung nach Anspruch 8 oder 9, **dadurch gekennzeichnet,**
- **dass** die Anzeige (4) die simulierte Schaltgassenkonfiguration (18) visualisiert, und
- **dass** das Überführen des Schalthebels (2) in einer Bewegungsrichtung aus der stabilen Ausgangsstellung (9) in eine der labilen Schaltstellungen (10, 11, 12, 13) ein Umschalten des Schalthebels (2) aus dessen aktueller virtueller Schaltgassenposition in die in derselben Bewegungsrichtung direkt benachbarte virtuelle Schaltgassenposition bewirkt.

11. Schaltvorrichtung nach einem der Ansprüche 1 bis 10, **dadurch gekennzeichnet, dass** eine Riegelvorrichtung vorgesehen ist, die den in die Ruhestellung (14) verstellten Schalthebel (2) in der Ruhestellung (14) verriegelt, solange wenigstens eine der folgenden Bedingungen erfüllt ist:
- ein Zündschlüssel eines mit dem Getriebe (6) ausgestatteten Fahrzeugs befindet sich nicht im Zündschloss;
- der Zündschlüssel befindet sich im Zündschloss in einer Abzugsposition;
- eine Betriebsbremse des Fahrzeugs ist unbetätigt.

12. Schaltvorrichtung nach einem der Ansprüche 1 bis 11, **dadurch gekennzeichnet, dass** eine Getriebesteuerung (5), die den labilen Schaltstellungen (10, 11, 12, 13) Automatikschaltstufen zuordnet, so ausgestaltet ist, dass sie Auslenkungen des Schalthebels (2) in eine dieser labilen Schaltstufen ignoriert, wenn die aktuell aktivierte Automatikschaltstufe eine Leerlauf-Schaltstufe N ist und wenn eine Betriebsbremse eines mit dem Getriebe (6) ausgestatteten Fahrzeugs unbetätigt ist.

13. Schaltvorrichtung nach einem der Ansprüche 1 bis 12, **dadurch gekennzeichnet, dass** eine Getriebesteuerung (5), die den labilen Schaltstellungen (10, 11, 12, 13) Automatikschaltstufen zuordnet, so ausgestaltet ist, dass sie bei aktuell aktivierter Leerlauf-Schaltstufe N die Auslenkungen des Schalthebels (2) in eine dieser labilen Schaltstufe nur dann berücksichtigt, wenn die Auslenkung in eine Vorne-Schaltstellung (10) oder in eine Hinten-Schaltstellung (11) erfolgt.

## Claims

1. Shifting device for an automated or automatic transmission (6), in particular of a motor vehicle, having
a gearshift lever (2) for selecting automatic shift stages and gearspeeds of the transmission (6) which can be moved out of a stable home position (9) into a plurality of directly adjacent, unstable shift positions (10, 11, 12, 13) for selecting the automatic shift stages and the gearspeeds, from which it returns automatically into the home position (9), and
a display (4) for displaying the currently engaged gearspeed and/or the currently activated automatic shift stage, wherein
only one further stable shift position of the gearshift lever (2) is provided, specifically the position of rest (14), and wherein
when the gearshift lever (2) is adjusted into the position of rest (14) a parking lock of the transmission (6) is activated, and
when the gearshift lever (2) is moved into the position of rest (14) the parking lock is activated mechanically,
**characterized in that**
the gearshift lever (2) can be moved out of the home position (9) into the position of rest (14) by means of a deflection movement within a real shifting gate (7), which is provided parallel to the longitudinal direction of the vehicle in the state in which the shifting device is mounted in the vehicle, from which position of rest (14) it can be moved out only in the direction of the home position (9), and
the parking lock of the transmission (6) is activated by the deflection movement of the gearshift lever (2).

2. Shifting device according to Claim 1, **characterized in that** a securing pushbutton key (22) is provided which, in the unactivated state, secures the gearshift lever (2), which has been adjusted into the position of rest (14), in the position of rest (14) and permits the gearshift lever (2) to move out of the position of rest (14) only in the activated state.

3. Shifting device according to Claim 2, **characterized in that** in the activated state the securing pushbutton key (22) secures the gearshift lever (2), which has been adjusted into the home position (9), in the home position (9) in such a way that said gearshift lever (2) can be adjusted into the adjacent unstable shift positions (10, 11, 12, 13) only in the unactivated state.

4. Shifting device according to Claim 2 or 3, **characterized in that** the securing pushbutton key (22) permits the gearshift lever (2) to move from the home position (9) into the position of rest (14) only in the activated state.

5. Shifting device according to one of Claims 2 to 4, **characterized in that** the securing pushbutton key (22) is formed on the gearshift lever (2) or is integrated therein.

6. Shifting device according to one of Claims 1 to 5, **characterized in that** precisely four unstable shift positions (10, 11, 12, 13) are arranged adjacent to the home position (9).

7. Shifting device according to one of Claims 1 to 6, **characterized**
- **in that** two unstable shift positions (10, 11) which are adjacent to the home position (9) are arranged in a first shifting gate (7) or longitudinal gate (7), and
- **in that** two unstable shift positions (12, 13) which are adjacent to the home position (9) are arranged in a second shifting gate (8) or transverse gate (8), and
- **in that** the first shifting gate (7) or longitudinal gate (7) is arranged perpendicularly with respect to the second shifting gate (8) or transverse gate (8), and
- **in that** the position of rest (14) is arranged at one end of the first shifting gate (7) or longitudinal gate (7).

8. Shifting device according to one of Claims 1 to 7, **characterized**
- **in that** a transmission controller (5) is provided which assigns the automatic shift stages and the gearspeeds to the unstable shift positions (10, 11, 12, 13) and which electronically activates the respectively selected gearspeed or the respectively selected automatic shift stage, and
- **in that** the transmission controller (5) simulates a shifting gate configuration (18) which is represented on a display (4) and which has an automatic shifting gate (19) for selecting the automatic shift stages and a tip-action shifting gate (20) parallel thereto for selecting the gearspeeds as well as a connecting gate (21) which extends transversely with respect to the shifting gates (19, 20), and
- **in that** a plurality of virtual stable shifting gate positions, which are each assigned one of the automatic shift stages, are simulated in the automatic shifting gate (19).

9. Shifting device according to Claim 8, **characterized**
- **in that** the virtual stable shifting gate positions of the automatic shifting gate (19) comprise a forward shift stage (D), a reverse shift stage (R) and an idling shift stage (N) which is preferably arranged therebetween, and
- **in that** the tip-action shifting gate (20) has a virtual stable shifting gate position which is assigned a manual shift stage (M), and two virtual unstable shifting gate positions which are directly adjacent thereto and which are assigned a shift-up position and a shift-down position for shifting the gearspeeds,
and
- **in that** the connecting gate (21) has two virtual stable shifting gate positions which are each assigned one of the automatic shift stages, and
- **in that** the virtual stable shifting gate positions of the connecting gate are the manual shift stage (M) of the tip-action shifting gate (20) and the forward shift stage (D) of the automatic shifting gate (19).

10. Shifting device according to Claim 8 or 9, **characterized**
- **in that** the display (4) visualizes the simulated shifting gate configuration (18),
and
- **in that** the moving of the gearshift lever (2) in a direction of movement out of the stable home position (9) into one of the unstable shift positions (10, 11, 12, 13) causes the gearshift lever (2) to be shifted from its actual virtual shifting gate position into the virtual shifting gate position which is directly adjacent in the same direction of movement.

11. Shifting device according to one of Claims 1 to 10, **characterized in that** a locking device is provided which locks the gearshift lever (2), which has been adjusted into the position of rest (14), in the position of rest (14) as long as at least one of the following conditions is met:
- an ignition key of a vehicle equipped with the transmission (6) is not in the ignition lock;
- the ignition key is in a withdrawal position in the ignition lock; and/or
- a service brake of the vehicle is not activated.

12. Shifting device according to one of Claims 1 to 11, **characterized in that** a transmission controller (5) which assigns automatic shift stages to the unstable shift positions (10, 11, 12, 13) is configured in such a way that it ignores deflections of the gearshift lever (2) into one of these unstable shift stages if the currently activated automatic shift stage is an idling shift stage N and if a service brake of a vehicle equipped with the transmission (6) is not activated.

13. Shifting device according to one of Claims 1 to 12, **characterized in that** a transmission controller (5) which assigns automatic shift stages to the unstable shift positions (10, 11, 12, 13) is configured in such a way that in the case of a currently activated idling shift stage N the deflections of the gearshift lever (2) into one of these unstable shift stages is taken into account only when the deflection occurs into a forward shift position (10) or into a rear shift position (11).

## Revendications

1. Dispositif de changement de vitesses pour une boîte de vitesses automatisée ou automatique (6), en particulier d'un véhicule automobile, comprenant
un levier de changement de vitesses (2) pour sélectionner des rapports de changement de vitesses automatique et des vitesses de la boîte de vitesses (6), lequel peut être transféré d'une position de départ stable (9) dans plusieurs positions de changement de vitesses instables immédiatement adjacentes (10, 11, 12, 13) pour sélectionner les rapports de changement de vitesses automatique et les vitesses, à partir desquelles il revient automatiquement à la position de départ (9), et
un affichage (4) pour visualiser la vitesse actuellement enclenchée et/ou le rapport de changement de vitesses automatique actuellement activé,
exclusivement une autre position de changement de vitesses stable du levier de changement de vitesses (2) étant prévue, à savoir la position de repos (14), et
lorsque le levier de changement de vitesses (2) est déplacé dans la position de repos (4), un verrouillage de stationnement de la boîte de vitesses (6) étant activé, et
lors du passage du levier de changement de vitesses (2) dans la position de repos (14), le verrouillage de stationnement étant activé mécaniquement,
**caractérisé en ce que** le levier de changement de vitesses (2) peut être transféré de la position de départ (9) dans la position de repos (14) au moyen d'un déplacement de déviation à l'intérieur d'une voie de changement de vitesses réelle (7) prévue parallèlement à la direction longitudinale du véhicule dans l'état du dispositif de changement de vitesses monté dans le véhicule, depuis laquelle voie de changement de vitesses le levier de changement de vitesses peut être ressorti exclusivement dans la direction de la position de départ (9), et
le verrouillage de stationnement de la boîte de vitesses (6) est activé par le déplacement de déviation du levier de changement de vitesses (2).

2. Dispositif de changement de vitesses selon la revendication 1, **caractérisé en ce qu'**il est prévu une touche de sécurité (22) qui, dans l'état non actionné, fixe dans la position de repos (14) le levier de changement de vitesses (2) déplacé dans la position de repos (14) et ne permet une sortie du levier de changement de vitesses (2) hors de la position de repos (14) que dans l'état actionné.

3. Dispositif de changement de vitesses selon la revendication 2, **caractérisé en ce que** la touche de sécurité (22), dans l'état actionné, fixe dans la position de départ (9) le levier de changement de vitesses (2) déplacé dans la position de départ (9), de telle sorte qu'il ne puisse être déplacé dans les positions de changement de vitesses instables adjacentes (10, 11, 12, 13) que dans l'état non actionné.

4. Dispositif de changement de vitesses selon la revendication 2 ou 3, **caractérisé en ce que** la touche de sécurité (22) ne permet un passage du levier de changement de vitesses (2) de la position de départ (9) dans la position de repos (14) que dans l'état actionné.

5. Dispositif de changement de vitesses selon l'une quelconque des revendications 2 à 4, **caractérisé en ce que** la touche de sécurité (22) est réalisée sur le levier de changement de vitesses (2) ou est intégrée dans celui-ci.

6. Dispositif de changement de vitesses selon l'une quelconque des revendications 1 à 5, **caractérisé en ce qu'**exactement quatre positions de changement de vitesses instables (10, 11, 12, 13) sont disposées en position adjacente à la position de départ (9).

7. Dispositif de changement de vitesses selon l'une quelconque des revendications 1 à 6, **caractérisé en ce que**
- deux positions de changement de vitesses instables (10, 11) adjacentes à la position de départ (9) sont disposées dans une première voie de changement de vitesses (7) ou voie longitudinale (7), et
- deux positions de changement de vitesses instables (12, 13) adjacentes à la position de départ (9) sont disposées dans une deuxième voie de changement de vitesses (8) ou voie transversale (8), et
- la première voie de changement de vitesses (7) ou voie longitudinale (7) est disposée perpendiculairement à la deuxième voie de changement de vitesses (8) ou voie transversale (8), et
- la position de repos (14) est disposée à une extrémité de la première voie de changement de vitesses (7) ou voie longitudinale (7).

8. Dispositif de changement de vitesses selon l'une quelconque des revendications 1 à 7, **caractérisé en ce que**
- il est prévu une commande de boîte de vitesses (5) qui associe aux positions de changement de vitesses instables (10, 11, 12, 13) les rapports de changement de vitesses automatique et les vitesses et qui active de manière électronique la vitesse respectivement sélectionnée ou le rapport de changement de vitesses automatique respectivement sélectionné, et
- la commande de boîte de vitesses (5) simule une configuration de voies de changement de vitesses (18) reproduite dans un affichage (4), laquelle présente une voie de changement de vitesses automatique (19) pour sélectionner les rapports de changement de vitesses automatique et une voie de changement de vitesses de basculement (20) parallèle à celle-ci pour sélectionner les vitesses ainsi qu'une voie de connexion (21) s'étendant transversalement aux voies de changement de vitesses (19, 20) et
- plusieurs positions de voie de changement de vitesses stables virtuelles sont simulées dans la voie de changement de vitesses automatique (19), l'un des rapports de changement de vitesses automatique étant à chaque fois associé à ces positions de voie de changement de vitesses stables virtuelles.

9. Dispositif de changement de vitesses selon la revendication 8, **caractérisé en ce que**
- les positions de voie de changement de vitesses stables virtuelles de la voie de changement de vitesses automatique (19) comprennent un rapport de changement de vitesses de marche avant (D), un rapport de changement de vitesses de marche arrière (R) et un rapport de changement de vitesses de marche à vide (N) disposé de préférence entre ceux-ci, et
- la voie de changement de vitesses de basculement (20) présente une position de voie de changement de vitesses stable virtuelle à laquelle est associé un rapport de changement de vitesses manuel (M), et deux positions de voie de changement de vitesses instables virtuelles directement adjacentes à celle-ci, auxquelles sont associées une position de passage à une vitesse supérieure et une position de rétrogradage changer les vitesses, et
- la voie de connexion (21) présente deux positions de voie de changement de vitesses stables virtuelles auxquelles est associé l'un des rapports de changement de vitesses automatique, et
- les positions de voie de changement de vitesses virtuelles stables de la voie de connexion sont le rapport de changement de vitesses manuel (M) de la voie de changement de vitesses de basculement (20) et le rapport de changement de vitesses de marche avant (D) de la voie de changement de vitesses automatique (19).

10. Dispositif de changement de vitesses selon la revendication 8 ou 9, **caractérisé en ce que**
- l'affichage (4) représente la configuration de voies de changement de vitesses simulée (18), et
- le passage du levier de changement de vitesses (2) dans une direction de déplacement depuis la position de départ stable (9) dans l'une des positions de changement de vitesses instables (10, 11, 12, 13) provoque une commutation du levier de changement de vitesses (2) de sa position de voie de changement de vitesses actuelle virtuelle à la position de voie de changement de vitesses virtuelle directement adjacente dans la même direction de déplacement.

11. Dispositif de changement de vitesses selon l'une quelconque des revendications 1 à 10, **caractérisé en ce qu'**il est prévu un dispositif de verrouillage, qui verrouille dans la position de repos (14) le levier de changement de vitesses (2) déplacé dans la position de repos (14), tant qu'au moins l'une des conditions suivantes est satisfaite :
- une clé d'allumage d'un véhicule muni de la boîte de vitesses (6) ne se trouve pas dans la serrure d'allumage ;
- la clé d'allumage se trouve dans la serrure d'allumage dans une position de retrait ;
- un frein de service du véhicule n'est pas actionné.

12. Dispositif de changement de vitesses selon l'une quelconque des revendications 1 à 11, **caractérisé en ce qu'**une commande de boîte de vitesses (5) qui associe des rapports de changement de vitesses automatique aux positions de changement de vitesses instables (10, 11, 12, 13) est configurée de telle sorte qu'elle ignore des déviations du levier de changement de vitesses (2) dans l'un de ces rapports de changement de vitesses instables lorsque le rapport de changement de vitesses automatique actuellement activé est un rapport de changement de vitesses de marche à vide N et lorsqu'un frein de service d'un véhicule muni de la boîte de vitesses (6) n'est pas actionné.

13. Dispositif de changement de vitesses selon l'une quelconque des revendications 1 à 12, **caractérisé en ce qu'**une commande de boîte de vitesses (5) qui associe des rapports de changement de vitesses automatique aux positions de changement de vitesses instables (10, 11, 12, 13) est configurée de telle sorte que lorsque le rapport de changement de vitesses de marche à vide N est actuellement activé, elle ne considère les déviations du levier de changement de vitesses (2) dans l'un de ces rapports de changement de vitesses instables que lorsque la déviation s'effectue dans une position de changement de vitesses vers l'avant (10) ou dans une position de changement de vitesses vers l'arrière (11).
